# EUROPEAN PATENT SPECIFICATION

(11) **EP 4 413 848 B1**
(45) Date of publication and mention of the grant of the patent: **20.08.2025**
(21) Application number: 24156631.4
(22) Date of filing: 08.02.2024
(51) Int. Cl.: A01D 41/127, A01D 41/12, A01D 43/08

(54) **SYSTEM AND METHOD FOR MONITORING UNLOADING OF AN AGRICULTURAL HARVESTER**
SYSTEM UND VERFAHREN ZUR ÜBERWACHUNG DER ENTLADUNG EINER LANDWIRTSCHAFTLICHEN ERNTEMASCHINE
SYSTÈME ET PROCÉDÉ DE SURVEILLANCE DE DÉCHARGEMENT D'UNE MOISSONNEUSE AGRICOLE

(30) Priority: 08.02.2023 US 202318107298
(43) Date of publication of application: 14.08.2024
(73) Proprietor: CNH Industrial America LLC, New Holland, PA 17557 (US)
(72) Inventor: ROMOSER, Tyler, New Holland, 17557 (US)
(74) Representative: CNH Industrial IP Department

(56) References cited:
- EP-A1- 2 250 871
- EP-A1- 2 765 398
- EP-A1- 4 104 666
- EP-B1- 0 775 612
- EP-B1- 2 293 664

## Description

### FIELD OF THE INVENTION

The present disclosure generally relates to agricultural harvesters and, more particularly, to systems and methods for monitoring unloading of an agricultural harvester.

### BACKGROUND OF THE INVENTION

A harvester is an agricultural machine used to harvest and process crops. For example, a combine harvester may be used to harvest grain crops, such as wheat, oats, rye, barley, corn, soybeans, and flax or linseed. In general, the objective is to complete several processes, which traditionally were distinct, in one pass of the machine over a particular part of the field. In this regard, most harvesters are equipped with a harvesting implement, such as a header, which cuts and collects the crop from the field and feeds it to the base harvester for further processing. The harvester also includes a crop processing system, which performs various processing operations (e.g., threshing, separating, cleaning, etc.) of the harvested crop received from the harvesting implement.

During harvesting operations, the operator of an agricultural harvester must generally monitor various operating parameters of the harvester. For example, the European patent application published as EP 2 250 871 A1 discloses an apparatus for indicating a grain tank fill level for a grain tank of an agricultural harvester with a display, a calculating means and an operator input device. The calculating means is configured to repetitively and automatically calculate the fill level of the grain tank and to repetitively and automatically indicate a scaled fill level that is scaled to a reference fill level.

Furthermore, European Patent application published as EP 4 104 666 A1 discloses a harvester according to the preamble of appended claim 1, and a method according to the preamble of appended claim 10.
However, such monitoring of operating parameters can direct the focus of the operator away from the harvesting operation, thereby leading to harvesting inefficiency, harvesting losses, and operator strain and fatigue. For example, the operator may have to take his or her eyes off the unloading operation to check whether the certain operating parameters of the harvester during harvesting operations. This may, in turn, distract the operator from the unloading operation.

Accordingly, an improved systems and methods for monitoring unloading of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to an agricultural harvester. The agricultural harvester includes a storage compartment comprising an inner surface and an outer surface, the inner surface defining a chamber. Moreover, the agricultural harvester includes an unloading tube configured to unload harvested crop from the storage compartment of the agricultural harvester. Furthermore, the agricultural harvester includes a fill level sensor configured to generate data indicative of a fill level of the storage compartment and an unloading rate sensor configured to generate data indicative of an unloading rate of the harvested crop material by the unloading tube. Additionally, the agricultural harvester includes a light-emitting device positioned within a field of view of an operator of the agricultural harvester when the operator is viewing an unloading of the harvested crop material by the unloading tube. Moreover, the agricultural harvester includes a computing system communicatively coupled to the fill level sensor. The computing system is configured to determine the fill level of the storage compartment based on the data generated by the fill level sensor and the unloading rate of the harvested crop material based on the data generated by the unloading rate sensor. The computing system is also configured to control an operation of the light-emitting device such that the light emitting device provides an indication of the determined fill level and that a color of light emitted by the light-emitting device is indicative of the unloading rate.

In another aspect, the present subject matter is directed to a system for monitoring unloading of an agricultural harvester. The system includes an unloading tube configured to unload harvested crop material from a storage compartment of the agricultural harvester. Additionally, the system includes a fill level sensor configured to generate data indicative of a fill level of the storage compartment and an unloading rate sensor configured to generate data indicative of an unloading rate of the harvested crop material by the unloading tube. Moreover, the system includes a light-emitting device positioned within a field of view of an operator of the agricultural harvester when the operator is viewing an unloading of the harvested crop material by the unloading tube. Furthermore, the system includes a computing system communicatively coupled to the fill level sensor. The computing system is configured to determine the fill level of the storage compartment based on the data generated by the fill level sensor and the unloading rate of the harvested crop material based on the data generated by the unloading rate sensor. The computing system is also configured to control an operation of the light-emitting device such that the light emitting device provides an indication of the determined fill level and that a color of light emitted by the light-emitting device is indicative of the unloading rate.

In a further aspect, the present subject matter is directed to a method for monitoring unloading of an agricultural harvester. The method includes receiving, with a computing system, fill level sensor data indicative of a fill level of a storage compartment of an agricultural harvester and unloading rate sensor data indicative of an unloading rate of the harvested crop material by the unloading tube. Additionally, the method includes, determining, with the computing system, the fill level of the storage compartment of the agricultural harvester based on the received fill level sensor data and the unloading rate of the harvested crop material based on the unloading rate sensor data. Furthermore, the method includes controlling, with the computing system, an operation of a light-emitting device positioned within a field of view of an operator of the agricultural harvester when the operator is viewing an unloading of the harvested crop material by an unloading tube such that the light-emitting device provides an indication of the determined fill level and that a color of light emitted by the light-emitting device is indicative of the unloading rate.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates an interior view of the operator's cab of the agricultural harvester 10 shown in FIG. 1 during unloading operations in accordance with aspects of the present subject matter;
FIG. 3 illustrates a schematic view of one embodiment of a system for monitoring unloading of an agricultural harvester in accordance with aspects of the present subject matter;
FIG. 4 illustrates a flow diagram providing one embodiment of control logic for monitoring unloading of an agricultural harvester in accordance with aspects of the present subject matter; and
FIG. 5 illustrates a flow diagram of one embodiment of a method for monitoring unloading of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. For instance, features illustrated or described as part of one embodiment can be used with another embodiment to yield still a further embodiment. Thus, it is intended that the present invention covers such modifications and variations as come within the scope of the appended claims and their equivalents.

In general, the present subject matter is directed to a system and a method for monitoring unloading of an agricultural harvester. As will be described below, the agricultural harvester includes a storage compartment having an inner surface and an outer surface, with the inner surface defining a chamber configured to store harvested crops. Furthermore, an unloading tube is configured to unload harvested crop material from the storage compartment of the agricultural harvester. Additionally, a fill level sensor is configured to generate data indicative of a fill level of the storage compartment.

In several embodiments, the agricultural harvester includes a light-emitting device that provides an indication of the fill level of the harvested crop within the storage compartment. Moreover, the light-emitting device is positioned within the field of view of the operator of the agricultural harvester when the operator is viewing unloading of harvested crop material via the unloading tube. For example, in one embodiment, the light-emitting device may be supported on an interior surface of a structural component of the cab of the agricultural harvester. In another embodiment, the light-emitting device may be supported on a railing of the operator's platform of the agricultural harvester. In a further embodiment, the light-emitting device may be supported on the unloading tube.

Additionally, in several embodiments, a computing system is communicatively coupled to the fill level sensor and configured to control the operation of the light-emitting device. More specifically, the computing system is configured to determine the fill level of the storage compartment based on the received fill level sensor data. Thereafter, the computing system is configured to control the operation of the light-emitting device such that the light-emitting device provides an indication of the determined fill level. For example, in some embodiments, the computing system may control the operation of the light-emitting device such that the individual light-emitting sections sequentially deactivate as the determined fill level decreases.

Controlling the operation of a light-emitting device to provide an indication of the fill level of the storage compartment within the field of view of the operator of the agricultural harvester when the operator is viewing an unloading of the harvested crop material by the unloading tube improves the operation of the agricultural harvester. More specifically, as indicated above, the operator may have to take his or her eyes off of the unloading operation to monitor or otherwise check certain operating parameters of the harvester during a harvesting operation. However, in the disclosed system and method, the light-emitting device is positioned within the field of view of the operator of the agricultural harvester when the operator is viewing the unloading of the harvested crop material by the unloading tube. Thus, with the disclosed system and method, the operator can receive visual notifications regarding the storage compartment loading status without having to take his or her eyes off the field. This, in turn, improves harvesting inefficiency and reduces harvesting losses and operator strain and fatigue.

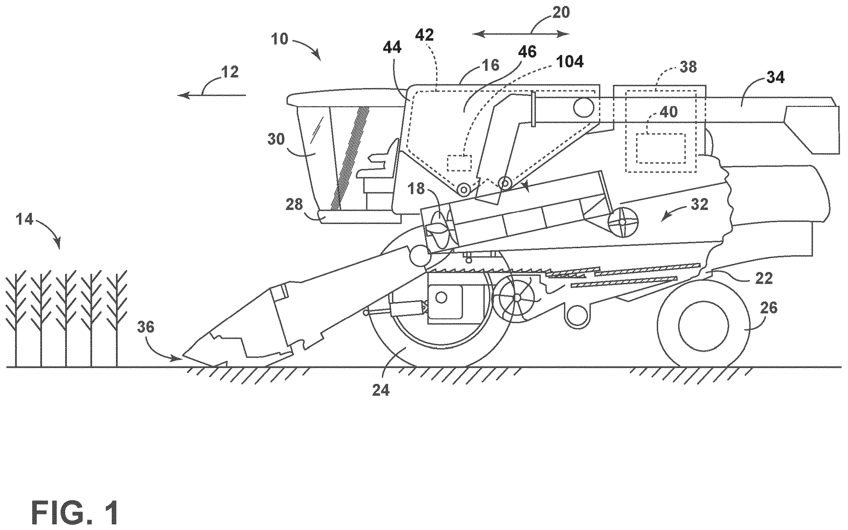

Referring now to the drawings, FIG. 1 illustrates a partial sectional side view one embodiment of an agricultural harvester 10 in accordance with aspects of the present subject matter. In general, the harvester 10 is configured to travel across a field in a forward direction of travel (indicated by arrow 12) to harvest a standing crop 14 present within the field. While traversing the field, the harvester 10 is configured to process the harvested material and store the grain, seed, or the like within a storage compartment 16 of the harvester 10.

**In** the illustrated embodiment, the harvester 10 is configured as an axial-flow type combine in which the harvested crop material is threshed and separated while being advanced by and along a rotor 18 extending in an axial direction 20. However, in alternative embodiments, the harvester 10 may have any other suitable harvester configuration, such as a traverse-flow type configuration in which the rotor extends in a lateral direction.

The harvester 10 may include a chassis or main frame 22 configured to support and/or couple to various components of the harvester 10. For example, in several embodiments, the harvester 10 may include a pair of driven, front wheels 24 and a pair of steerable, rear wheels 26 coupled to the chassis 22. As such, the wheels 24, 26 may be configured to support the harvester 10 relative to the ground and move the harvester 10 in the forward direction of travel 12. Furthermore, the harvester 10 may include an operator's platform 28, an operator's cab 30, a crop processing system 32, the storage compartment 16, and an unloading tube 34 supported by the chassis 22. The crop processing system 32 may be configured to perform various processing operations on the harvested material as the crop processing system 32 transfers the harvested material from a harvesting implement 36 (e.g., a header) of the harvester 10 and through the harvester 10. Furthermore, as will be described below, the harvester 10 may be configured to perform unloading operations of the harvested material as the storage compartment 16 of the harvester 10 is filled with processed crop. Moreover, the harvester 10 may include an engine 38 and a transmission 40 mounted on the chassis 22. The transmission 40 may be operably coupled to the engine 38 and may provide variably adjusted gear ratios for transferring engine power to the wheels 24 via a drive axle assembly (or via axles if multiple drive axles are employed).

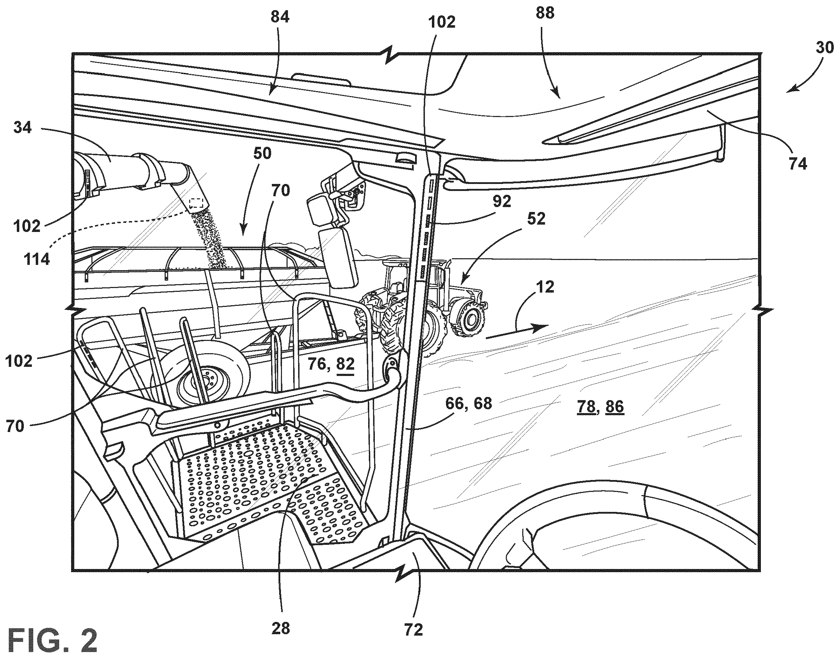

After the crop processing system 32 performs processing operations on the harvested material, the harvested material is transferred to the storage compartment 16 of the harvester 10 in preparation for unloading operations of the harvested material. In several embodiments, the storage compartment 16 includes one or more inner surfaces 42 and one or more outer surfaces 44. The inner surface(s) 42 defines a chamber 46 in which the harvested material is stored. As will be described below, the unloading tube 34 is configured to unload the harvested crop material stored within the chamber 46 of the storage compartment 16 into a cart 50 (FIG. 2). However, it should be appreciated that, in other embodiments, the storage compartment 16 may have any other suitable configuration that permits storage of the processed crop material.

Additionally, the agricultural harvester 10 includes one or more fill level sensors 104 configured to generate data indicative of the fill level of the storage compartment 16. As such, in several embodiments, the fill level sensor(s) 104 may be positioned within the storage compartment 16. For example, in some embodiments, the fill level sensor(s) 104 may be coupled to the inner surface(s) 42 of the storage compartment 16. For example, in one embodiment, the fill level sensor(s) 104 may be a contact sensor(s) configured to sense a weight of harvested material in contact with the contact sensor(s) and generate data indicative of the fill level of the storage compartment 16 based on the sensed weight of the harvested material in contact with the contact sensor(s). However, the fill level sensor(s) 104 may be configured as any other type of sensor(s) capable of sensing the fill level of harvested material in the storage compartment 16. Furthermore, the fill level sensor(s) 104 may be positioned at any other suitable location(s) that allows the fill level sensor(s) 104 to generate data indicative of the fill level of the storage compartment 16.

FIG. 2 illustrates an interior view of the operator's cab 30 of the agricultural harvester 10 shown in FIG. 1 during unloading operations in accordance with aspects of the present subject matter. In this respect, FIG. 2 illustrates the field of view of the of the operator of the agricultural harvester 10 when the operator is positioned within the cab 30 and viewing the unloading of crop material from the harvester 10. More specifically, as indicated above, during unloading operations, the unloading tube 34 unloads harvested crop material from the chamber 46 (FIG. 1) of the storage compartment 16 (FIG. 1) into the cart 50 positioned adjacent to the harvester 10. The cart 50, in turn, is configured to be towed by a work vehicle 52, such as the illustrated agricultural tractor. As such, the harvester 10 may be configured to perform unloading operations while the harvester 10 and the cart/work vehicle 50/52 travel across the field in the direction of travel 12.

Furthermore, the operator's cab 30 may include various structural components that form an enclosure in which operator may sit when operating the harvester 10. For example, the operator's cab 30 may include one more cabin pillars 66 extending between a floor 72 and a ceiling 74 of the operator's cab 30. The cabin pillar(s) 66 may be coupled to the floor 72 and/or the ceiling 74 of the operator's cab 30. Moreover, the operator's cab 30 may include one or more windshields or windows 76, with each windshield 76 extending between two adjacent cabin pillars 66. Additionally, each windshield 76 may define at least a portion of a side of the operator's cab 30. As such, an operator may view agricultural operations exterior of the harvester 10 via the windshield(s) 76. **In** this respect, the operator may view the unloading tube 34, the cart 50, and the work vehicle 52 during unloading operations through a first windshield 82 and a second windshield 86. The first windshield 82 may, in turn, define at least a portion of a first side 84 of the operator's cab 30 through which the operator may view the unloading tube 34, the cart 50, and the work vehicle 52 during unloading operations. The second windshield 86 may, in turn, define at least a portion of a second side 88 of the operator's cab 30 perpendicular to the first side 84 of the operator's cab 30. The operator may also view at the unloading tube 34, the cart 50, and the work vehicle 52 through the second side 88 of the operator's cab 30. The first side 84 may be opposite of various monitoring systems (not shown) and/or control modules (not shown) located adjacent to an opposing side (not shown) such that the operator may be required to take his or her attention off the monitoring systems (not shown) and/or control modules (not shown) while the operator views unloading operations (e.g., the unloading tube 34, the cart 50, and/or the work vehicle 52).

Furthermore, as mentioned above, the harvester 10 may include an operator's platform 28 supported by the chassis 22 (FIG. 1). The operator's platform 28 may be located adjacent to the operator's cab 30 such that the operator can access the operator's cab 30 from the operator's platform 28. For example, the operator's cab 28 may be located adjacent to the first side 84 of the operator's cab 30 such that the operator's platform 28, or one or more components thereof, may be in the operator's field of view while the operator is viewing unloading operations. However, in alternative, the operator's platform 28 may be located in any other suitable location adjacent to the operator's cab 30 such that the operator can access the operator's cab 30. Additionally, the operator's platform 28 may include one or more railings 70 to facilitate entry and exit of the operator from the operator's cab 30. Thus, the railing(s) 70 may be in the operator's field of view while the operator is viewing unloading operations when the operator's platform 28 is located adjacent to the first side 84 of the operator's cab 30.

Moreover, the harvester 10 may include one or more light-emitting devices 102. In general, the light-emitting device(s) 102 provide an indication of the fill level of the harvested and processed crop material being stored within the storage compartment 16. For example, in several embodiments, the light-emitting device(s) 102 may include one or more light-emitting sections 92 (e.g., five light-emitting sections). In this respect, differing numbers and/or arrangements of the light-emitting section(s) 92 may be illuminated to indicate the fill level of the storage compartment. For example, in some embodiments, when the storage compartment 16 is completely full of harvested material, all of the light-emitting sections 92 may be illuminated. Furthermore, in such embodiments, the light-emitting sections 92 may sequentially deactivate as the fill level of the storage compartment 16 decreases (e.g., due to unloading of the crop material via the unloading tube 34). For example, in one embodiment, the light-emitting section(s) 92 may be arranged in a single column. As such, as the unloading tube 34 unloads harvested material from the storage compartment 16, each of the light-emitting sections 92 may de-illuminate in descending order from top to bottom to indicate the change in harvested material within the storage compartment 16. However, in alternative embodiments, the light-emitting device(s) 102 may include any suitable number or configuration of light-emitting sections 92.

Additionally, in some embodiments, the light-emitting device(s) 102 may provide an indication of the unloading rate at which the harvested material is unloaded from the storage compartment 16 via the unloading tube 34. Specifically, in such embodiments, the light-emitting device(s) 102 may emit different light colors indicative of various unloading rates. For example, the color of the light emitted by the light-emitting device(s) 102 may be a first light color (e.g., yellow) corresponding to a first unloading rate (e.g., slow unloading rate). The light-emitting device(s) 102 may also emit a second light color (e.g., green) corresponding to a second unloading rate (e.g., fast unloading rate). It should be appreciated that the light colors and unloading rates may correspond to any suitable number of light colors and unloading rates.

Furthermore, the light-emitting device(s) 102 may be positioned within a field of view of the operator while the operator is viewing an unloading of the harvested crop material by the unloading tube 34. **In** some embodiments, the light-emitting device(s) 102 may be supported on an interior surface 68 of one of the cabin pillars 66 (e.g., the A-pillar). For example, the light-emitting device(s) 102 may be supported on the interior surface 68 of the cabin pillar 66 located on the first side 84 of the operator's cab 30. Additionally, in some other embodiments, the light-emitting device(s) 102 may be supported on one of the railings 70 when the operator's platform 28 is located adjacent to the first side 84 of the operator's cab 30. Moreover, in some other embodiments, the light-emitting device(s) 102 may be supported on the unloading tube 34 during unloading operations adjacent to the first side 84. As such, the light-emitting device(s) 102 are positioned within a field of view of the operator while the operator is viewing an unloading of the harvested crop material by the unloading tube 34. However, it should be appreciated that the light-emitting device(s) 102 may be supported in any other suitable location within a field of view of the operator while the operator is viewing an unloading of the harvested crop material by the unloading tube 34.

Moreover, the light-emitting device(s) 102 may correspond to any suitable type and/or combination of devices configured to emit light. For example, the light-emitting device(s) 102 may correspond to a series of light-emitting diodes (LED), standard fluorescent bulbs, compact fluorescent (CFL) bulbs, halogen bulbs, incandescent bulbs, or the like. Additionally, the light-emitting section(s) 92 may correspond to any kind of light-emitting section. For example, each light-emitting section 92 may correspond to a light-emitting diode (LED), standard fluorescent bulb, compact fluorescent (CFL) bulb, halogen bulb, incandescent bulb, or the like.

It should be further be appreciated that the configuration of the agricultural harvester 10 described above and shown in FIGS. 1-2 are provided only to place the present subject matter in an exemplary field of use. Thus, it should be appreciated that the present subject matter may be readily adaptable to any manner of harvester configuration.

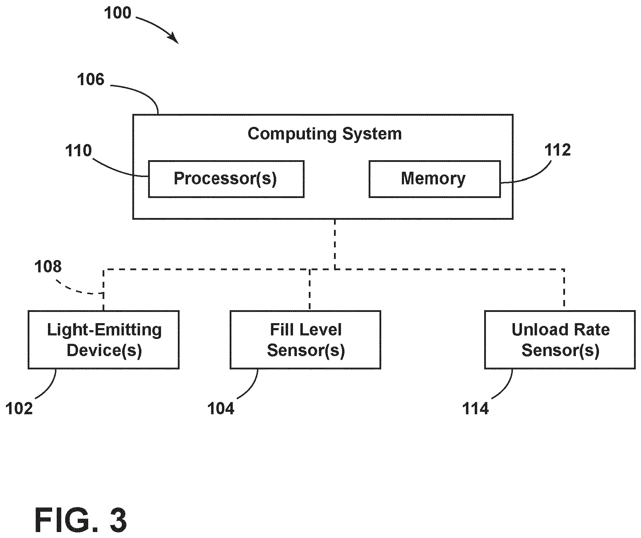

Referring now to FIG. 3, a schematic view of one embodiment of a system 100 for monitoring unloading of an agricultural harvester is illustrated in accordance with aspects of the present subject matter. In general, the system 100 will be described herein with reference to the agricultural harvester 10 described above with reference to FIGS. 1-2. However, it should be appreciated by those of ordinary skill in the art that the disclosed system 100 may generally be utilized with agricultural harvesters having any other suitable harvester configuration.

As shown in FIG. 3, the system 100 includes the light-emitting device(s) 102, which is positioned within a field of view of an operator of the agricultural harvester 10 when the operator is viewing an unloading of the harvested crop material by the unloading tube 34 (FIG. 2). Additionally, the system 100 may include the fill level sensor(s) 104 configured to generate data indicative of the fill level of the storage compartment 16.

Furthermore, the system 100 may include one or more unloading rate sensor(s) 114 configured to generate data indicative of an unloading rate at which the harvested material is unloaded from the storage compartment 16 via the unloading tube 34. For example, in some embodiments, the unloading rate sensor(s) 114 may correspond to sensor(s) that measure conveyor speed of the unloading tube 34, quantity of harvested material remaining in the storage compartment 16, and/or the like. In such embodiments, the unloading rate sensor(s) 114 may be positioned within the unloading tube 34. However, the unloading rate sensor(s) 114 may be positioned in any other location suitable and/or have any other suitable configuration for generating data indicative of the unloading rate at which the harvested material is unloaded from the storage compartment 16 via the unloading tube 34.

Moreover, the system 100 includes a computing system 106 communicatively coupled to one or more components of the agricultural harvester 10 and/or the system 100 to allow the operation of such components to be electronically or automatically controlled by the computing system 106. For instance, the computing system 106 may be communicatively coupled to the fill level sensor(s) 104 and the unloading rate sensor(s) 114 via a communicative link 108. As such, the computing system 106 may be configured to receive data from the fill level sensor(s) 104 that is indicative of the fill level of the storage compartment of the harvester 10. Likewise, the computing system 106 may be configured to receive data from the unloading rate sensor(s) 114 indicative of the unloading rate of the harvested crop material by the unloading tube 34. Furthermore, the computing system 106 is communicatively coupled to the light-emitting device(s) 102 via the communicative link 118. In this respect, the computing system 106 may be configured to control the operation of the light-emitting device(s) 102 such that the light-emitting device(s) 102 emit light in a manner that provides an indication(s) to the operator associated with the fill level of the storage compartment 16 of the harvester 10 and/or the unloading rate of the harvested crop material by the unloading tube 34 based on the data received from the fill level sensor(s) 104 and the unloading rate sensor(s) 114. In addition, the computing system 106 may be communicatively coupled to any other suitable components of the agricultural harvester 10 and/or the system 100.

In general, the computing system 106 may comprise one or more processor-based devices, such as a given controller or computing device or any suitable combination of controllers or computing devices. Thus, in several embodiments, the computing system 106 may include one or more processor(s) 110 and associated memory device(s) 112 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 112 of the computing system 106 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 112 may generally be configured to store suitable computer-readable instructions that, when implemented by the processor(s) 110, configure the computing system 106 to perform various computer-implemented functions, such as one or more aspects of the methods and algorithms that will be described herein. In addition, the computing system 106 may also include various other suitable components, such as a communications circuit or module, one or more input/output channels, a data/control bus and/or the like.

The various functions of the computing system 106 may be performed by a single processor-based device or may be distributed across any number of processor-based devices, in which instance such devices may be considered to form part of the computing system 106. For instance, the functions of the computing system 106 may be distributed across multiple application-specific controllers or computing devices, such as a navigation controller, an engine controller, a transmission controller, a row guidance controller, and/or the like.

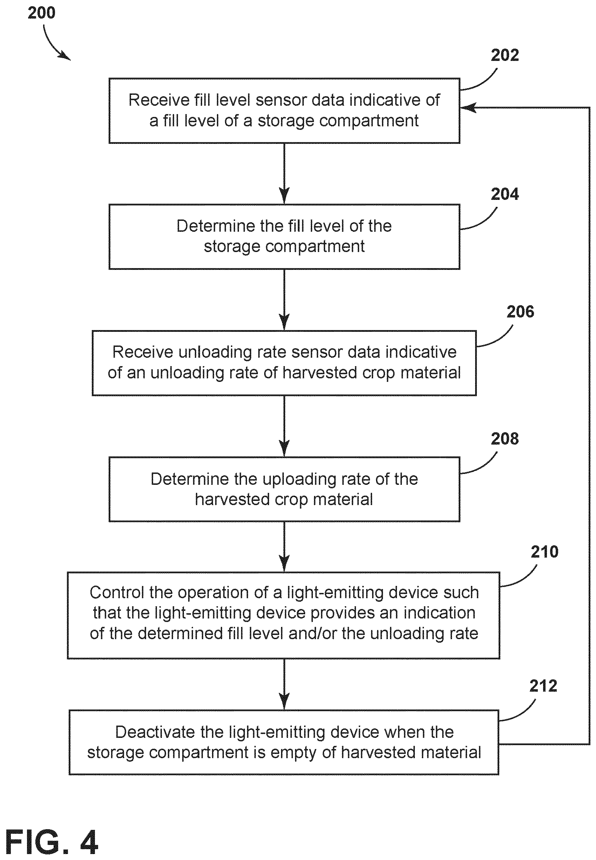

Referring now to FIG. 4, a flow diagram of one embodiment of example control logic 200 that may be executed by the computing system 106 (or any other suitable computing system) for monitoring unloading of an agricultural harvester is illustrated in accordance with aspects of the present subject matter. Specifically, the control logic 200 shown in FIG. 4 is representative of steps of one embodiment of an algorithm that can be executed to monitor unloading of an agricultural harvester in a manner that does not require the operator to take his or her eyes off of the field in front of the harvester. Thus, in several embodiments, the control logic 200 may be advantageously utilized in association with a system installed on or forming part of an agricultural harvester to allow for providing real-time monitoring during unloading operations of an agricultural harvester without requiring substantial computing resources and/or processing time. However, in other embodiments, the control logic 200 may be used in association with any other suitable system, application, and/or the like for monitoring unloading of an agricultural harvester.

As shown, at (202), the control logic 200 includes receiving fill level sensor data indicative of a fill level of a storage compartment of an agricultural harvester 10. For example, as mentioned above, in some embodiments, the computing system 106 may be communicatively coupled to the fill level sensor(s) 104 via the communicative link 108. In this respect, during operation of the agricultural harvester 10, the computing system 106 may receive data from the fill level sensor(s) 104. Such data may, in turn, be indicative of the fill level of the storage compartment 16 of an agricultural harvester 10. The fill level data of the storage compartment 16 received by the computing system 106 from the fill level sensor(s) 104 may fluctuate as the storage compartment 16 is loaded with harvested material during harvesting operations or unloaded during unloading operations.

Additionally, at (204), the control logic 200 includes determining the fill level of the storage compartment of the agricultural harvester 10 based on the data generated by the fill level sensor at (202). Specifically, in several embodiments, the computing system 106 may be configured to determine the fill level of the storage compartment 16 based on sensor data (e.g., weight data) received from the fill level sensor(s) 104 at (202).

Furthermore, at (206), the control logic 200 includes receiving an input indicative of an unloading rate of the harvested crop material by the unloading tube. Such input may be sensor data and/or operator input. For example, as mentioned above, in some embodiments, the computing system 106 may be communicatively coupled to the unloading rate sensor(s) 114 via the communicative link 108. In this respect, while the harvested material is unloaded from the storage compartment 16 into the cart 50 by the unloading tube 34, the computing system 106 may receive data from the unloading rate sensor(s) 114. Such data may, in turn, be indicative of an unloading rate of the harvested crop material by the unloading tube 34. For example, the data may be the speed of a conveyor carrying harvester material through the unloading tube. The unloading rate data of the harvested crop material received by the computing system 106 from the unloading rate sensor(s) 114 may fluctuate as the unloading rate of the harvested material from the storage compartment 16 increases or decreases during unloading operations. Such fluctuation of the unloading rate data may be caused by a manually controlled (e.g., operator controlled) or automatically controlled (e.g., computer controlled) change in the unloading rate of the harvested material. Alternatively, the computing system 106 may be configured to receive one or more operator inputs that are indicative of the rate at which the harvested material is unloaded. Such operator input(s) may be operational settings such as conveyor speed of the unloading tube 34. However, operator inputs may be any suitable input to control the rate at which the harvested material is unloaded from the unloading tube 34.

Moreover, at (208), the control logic 200 includes determining the unloading rate of the harvested crop material based on the data generated by the unloading rate sensor at (206). Specifically, in several embodiments, the computing system 106 may be configured to determine the unloading rate based on data received from the unloading rate sensor(s) 114 and/or operator input of the harvested material as it is unloaded by the unloading tube 34 into the cart 50 as the harvester 10 and the cart 50 travel across a field in the direction of travel 12 or while the harvester 10 and the cart 50 are stationary.

Furthermore, at (210), the control logic 200 includes controlling an operation of a light-emitting device positioned within a field of view of an operator of the agricultural harvester 10 when the operator is viewing the unloading of the harvested crop material by the unloading tube such that the light-emitting device provides an indication of the determined fill level and/or the unloading rate.

Specifically, at (210), in several embodiments, the computing system 106 may be configured to control the operation of the light-emitting device(s) 102 based on the fill level of the storage compartment 16 determined at (204). More specifically, as mentioned above, the computing system 106 is communicatively coupled to the light-emitting device(s) 102 via the communicative link 108. In this respect, when the when the storage compartment 16 contains agricultural material, the computing system 106 may transmit control signals to the light-emitting device(s) 102 via the communicative link 108. Such control signals instruct the light-emitting device(s) 102 to emit light in an initial color (e.g., white light). The emitted light is, in turn, visible to the operator within the operator's cab 30 when the operator monitoring the harvesting operation. Thus, when the operator sees the light-emitting device(s) 102 emitting light in the initial color, he or she then knows that the storage compartment 16 contains agricultural material.

Additionally, at (210), in several embodiments, the light-emitting device(s) may include the light-emitting sections 92 such that differing numbers and/or arrangements of the light-emitting sections 92 may be illuminated to indicate the determined fill level of the storage compartment 16. In some embodiments, at (210), the computing system 106 may be configured to control the operation of the light-emitting device(s) 102 such that the individual light-emitting sections sequentially deactivate as the determined fill level decreases. For example, the determined fill level may decrease as a result of the harvested material being unloaded from the storage compartment 16 during unloading operations.

Moreover, at (210), in several embodiments, the computing system 106 may be configured to control the operation of the light-emitting device(s) 102 based on the unloading rate of the harvested material determined at (208). As such, the control logic 200 includes controlling the operation of the light-emitting device(s) 102 such that a color of light emitted by the light-emitting device(s) 102 is indicative of the unloading rate. For example, the computing system 106 may transmit control signals to the light-emitting device(s) 102 via the communicative link 108. Such control signals instruct the light-emitting device(s) 102 to emit a color of light indicative of the unloading rate. **In** such embodiments, after the unloading rate of the harvested crop material is determined at (208), the computing system 106 may control the operation of the light-emitting device(s) 102 such that the light-emitting device(s) 102 emit light in a first color (e.g., yellow) corresponding to a first unloading rate (e.g., a slow unloading rate), or a second color (e.g., green) corresponding to a second unloading rate (e.g., a fast unloading rate). **In** such embodiments, the second color is different from the first color, and the second unloading rate is different from the first unloading rate. The emitted light is, in turn, visible to the operator within the operator's cab 30 when the operator monitoring the harvesting operation. Thus, when the operator sees the light-emitting device(s) 102 emitting light in the first color, he or she then knows that the unloading rate corresponds to the first unloading rate. Similarly, when the operator sees the light-emitting device(s) 102 emitting light in the second color, he or she then knows that the unloading rate corresponds to the second unloading rate.

Finally, at (212), the control logic 200 includes deactivating the light-emitting device when the storage compartment 16 is empty of harvested material. Specifically, in several embodiments, the computing system 106 is configured to deactivate the light-emitting device(s) 102 when the storage compartment 16 is empty of harvested material. For example, the computing system 106 may transmit control signals to the light-emitting device(s) 102 via the communicative link 108. Such control signals instruct the light-emitting device(s) 102 to deactivate when the storage compartment 16 is empty of harvested material.

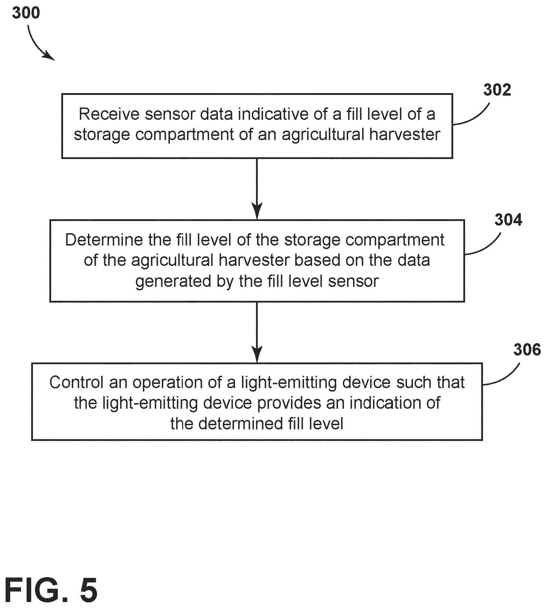

Referring now to FIG. 5, a flow diagram of one embodiment of a method 300 for monitoring unloading of an agricultural harvester is illustrated in accordance with aspects of the present subject matter. In general, the method 300 will be described herein with reference to the agricultural harvester 10 and the system 100 described above with reference to FIGS. 1-4. However, it should be appreciated by those of ordinary skill in the art that the disclosed method 300 may generally be implemented with any agricultural harvester having any suitable harvester configuration and/or within any system having any suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 5, at (302), the method 300 includes receiving, with a computing system, fill level sensor data indicative of a fill level of a storage compartment of an agricultural harvester. For instance, as described above, the computing system 106 may be configured to receive data from the fill level sensor(s) 104. Such data may, in turn, be indicative of a fill level of the storage compartment 16 of an agricultural harvester 10.

Furthermore, at (304), the method 300 includes determining, with the computing system, the fill level of the storage compartment of the agricultural harvester based on the data generated by the fill level sensor at (302). For instance, as described above, the computing system 106 may be configured to determine the fill level of the storage compartment 16 based on received fill level sensor data.

Additionally, at (306), the method 300 includes controlling, with the computing system, an operation of a light-emitting device positioned within a field of view of an operator of the agricultural harvester when the operator is viewing an unloading of the harvested crop material by an unloading tube such that the light-emitting device provides an indication of the determined fill level. For instance, as described above, the computing system 106 may be configured to control the operation of the light-emitting device(s) 102 such that the individual light-emitting sections sequentially deactivate as the determined fill level decreases. For example, the determined fill level may decrease as a result of the harvested material being unloaded from the storage compartment 16 during unloading operations.

It is to be understood that the steps of the control logic 200 and the method 300 are performed by the computing system 106 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 106 described herein, such as the control logic 200 and the method 300, is implemented in software code or instructions which are tangibly stored on a tangible computer readable medium. The computing system 106 loads the software code or instructions via a direct interface with the computer readable medium or via a wired and/or wireless network. Upon loading and executing such software code or instructions by the computing system 106, the computing system 106 may perform any of the functionality of the computing system 106 described herein, including any steps of the control logic 200 and the method 300 described herein.

## Claims

1. An agricultural harvester (10) comprising a system (100) for monitoring unloading of the agricultural harvester (10), the system (100) comprising an unloading tube (34) configured to unload harvested crop material from a storage compartment (16) of the agricultural harvester (10), the system (100) comprising:
a fill level sensor (104) configured to generate data indicative of a fill level of the storage compartment (16);
an unloading rate sensor (114) configured to generate data indicative of an unloading rate of the harvested crop material by the unloading tube (34);
a light-emitting device (102) positioned within a field of view of an operator of the agricultural harvester (10) when the operator is viewing an unloading of the harvested crop material by the unloading tube (34); and
a computing system (106) communicatively coupled to the fill level sensor (104) and the unloading rate sensor (114), the computing system (106) configured to:
determine the fill level of the storage compartment (16) based on the data generated by the fill level sensor (104), to
determine the unloading rate of the harvested crop material based on the data generated by the unloading rate sensor (114); and to
control an operation of the light-emitting device (102) such that the light-emitting device (102) provides an indication of the determined fill level;
and further **characterized in that** a color of light emitted by the light-emitting device (102) is indicative of the unloading rate.

2. The agricultural harvester (10) of claim 1, wherein the light-emitting device (102) comprises a plurality of individual light-emitting sections (92) such that at least one of a number or arrangement of individual light-emitting sections (92) that are illuminated is indicative of the determined fill level.

3. The agricultural harvester (10) of claim 2, wherein the computing system (106) is further configured to control the operation of the light-emitting device (102) such that the individual light-emitting sections (92) sequentially deactivate as the determined fill level decreases.

4. The agricultural harvester (10) of claim 3, wherein the color of the light emitted by the light-emitting device (102) is a first light color when the unloading rate corresponds to a first unloading rate.

5. The agricultural harvester (10) of any of claims 3 or 4, wherein the color of the light emitted by the light-emitting device (102) is a second light color when the unloading rate corresponds to a second unloading rate, the second light color being different than the first light color, the second unloading rate being different than the first unloading rate.

6. The agricultural harvester (10) of any preceding claim, wherein the computing system (106) is further configured to deactivate the light-emitting device (102) when the storage compartment (16) is empty of harvested material.

7. The agricultural harvester (10) of any preceding claim, wherein the light-emitting device (102) is supported on an interior surface (68) of a structural component (66) of a cab (30) of the agricultural harvester (10).

8. The agricultural harvester (10) of any preceding claim, wherein the light-emitting device (102) is supported on a railing (70) of an operator's platform (28) of the agricultural harvester (10).

9. The agricultural harvester (10) of any preceding claim, wherein the light-emitting device (102) is supported on the unloading tube (34).

10. A method (300) for monitoring unloading of an agricultural harvester (10), the agricultural harvester (10) including an unloading tube (34) configured to unload harvested crop material from a storage compartment (16) of the agricultural harvester (10), the method comprising:
receiving, with a computing system (106), fill level sensor data indicative of a fill level of the storage compartment (16) of the agricultural harvester (10);
receiving, with the computing system (106), unloading rate sensor data indicative of an unloading rate of the harvested crop material by the unloading tube (34);
determining, with the computing system (106), the fill level of the storage compartment (16) of the agricultural harvester (10) based on the received fill level sensor data;
determining, with the computing system (106), the unloading rate of the harvested crop material based on the unloading rate sensor data; and
controlling, with the computing system (106), an operation of a light-emitting device (102) positioned within a field of view of an operator of the agricultural harvester (10) when the operator is viewing the unloading of harvested crop material by the unloading tube (34) such that the light-emitting device (102) provides an indication of the determined fill level;
and **characterized in that** a color of light emitted by the light-emitting device (102) is indicative of the unloading rate.

11. The method (300) as in claim 10, wherein controlling the operation of the light-emitting device (102) comprises controlling, with the computing system (106), the operation of the light-emitting device (102) such that individual light-emitting sections (92) of a plurality of light-emitting sections (92) sequentially deactivate as the determined fill level decreases.

12. The method (300) as in any of claims 10 or 11, further comprising deactivating, with the computing system (106), the light-emitting device (102) when the storage compartment (16) is empty of harvested material.

13. The method (300) as in any of claims 10 through 12, wherein the light-emitting device (102) is supported on an interior surface (68) of a structural component (66) of a cab (30) of the agricultural harvester (10).

## Patentansprüche

1. Landwirtschaftliche Erntemaschine (10), umfassend ein System (100) zur Überwachung eines Entleerungsvorgangs der landwirtschaftlichen Erntemaschine (10), wobei das System (100) ein Auswurfrohr (34) umfasst, das dazu eingerichtet ist, geerntetes Erntegutmaterial aus einem Lagerbehälter (16) der landwirtschaftlichen Erntemaschine (10) auszutragen, wobei das System (100) umfasst:
einen Füllstandssensor (104), der dazu eingerichtet ist, Daten zu erzeugen, die kennzeichnend sind für einen Füllstand des Lagerbehälters (16);
einen Austragratensensor (114), der dazu eingerichtet ist, Daten zu erzeugen, die kennzeichnend sind für eine Austragsrate des geernteten Erntegutmaterials durch das Auswurfrohr (34);
eine lichtemittierende Vorrichtung (102), die innerhalb eines Sichtfeldes eines Bedieners der landwirtschaftlichen Erntemaschine (10) angeordnet ist, wenn der Bediener das Ausbringen des geernteten Erntegutmaterials durch das Auswurfrohr (34) beobachtet; und
ein Rechensystem (106), das mit dem Füllstandssensor (104) und dem Austragratensensor (114) kommunizierend verbunden ist, wobei das Rechensystem (106) dazu eingerichtet ist:
den Füllstand des Lagerbehälters (16) auf Basis der vom Füllstandssensor (104) erzeugten Daten zu bestimmen;
die Austragsrate des geernteten Erntegutmaterials auf Basis der vom Austragratensensor (114) erzeugten Daten zu bestimmen; und
den Betrieb der lichtemittierenden Vorrichtung (102) so zu steuern, dass die lichtemittierende Vorrichtung (102) eine Anzeige des bestimmten Füllstands bereitstellt,
weiterhin **dadurch gekennzeichnet, dass**
eine von der lichtemittierenden Vorrichtung (102) emittierte Lichtfarbe kennzeichnend für die Austragsrate ist.

2. Landwirtschaftliche Erntemaschine (10) nach Anspruch 1, wobei die lichtemittierende Vorrichtung (102) eine Mehrzahl einzelner lichtemittierender Abschnitte (92) umfasst, sodass zumindest einer von einigen oder einer Anordnung beleuchteter einzelner lichtemittierender Abschnitte (92) kennzeichnend für den bestimmten Füllstand ist.

3. Landwirtschaftliche Erntemaschine (10) nach Anspruch 2, wobei das Rechensystem (106) ferner dazu eingerichtet ist, den Betrieb der lichtemittierenden Vorrichtung (102) so zu steuern, dass sich die einzelnen lichtemittierenden Abschnitte (92) nacheinander deaktivieren, wenn der bestimmte Füllstand abnimmt.

4. Landwirtschaftliche Erntemaschine (10) nach Anspruch 3, wobei die Lichtfarbe, die von der lichtemittierenden Vorrichtung (102) emittiert wird, eine erste Lichtfarbe ist, wenn die Austragsrate einer ersten Austragsrate entspricht.

5. Landwirtschaftliche Erntemaschine (10) nach Anspruch 3 oder 4, wobei die Lichtfarbe, die von der lichtemittierenden Vorrichtung (102) emittiert wird, eine zweite Lichtfarbe ist, wenn die Austragsrate einer zweiten Austragsrate entspricht, wobei die zweite Lichtfarbe sich von der ersten Lichtfarbe unterscheidet und die zweite Austragsrate sich von der ersten Austragsrate unterscheidet.

6. Landwirtschaftliche Erntemaschine (10) nach einem der vorhergehenden Ansprüche, wobei das Rechensystem (106) ferner dazu eingerichtet ist, die lichtemittierende Vorrichtung (102) zu deaktivieren, wenn der Lagerbehälter (16) frei von geerntetem Material ist.

7. Landwirtschaftliche Erntemaschine (10) nach einem der vorhergehenden Ansprüche, wobei die lichtemittierende Vorrichtung (102) an einer Innenfläche (68) eines Strukturbauteils (66) einer Kabine (30) der landwirtschaftlichen Erntemaschine (10) befestigt ist.

8. Landwirtschaftliche Erntemaschine (10) nach einem der vorhergehenden Ansprüche, wobei die lichtemittierende Vorrichtung (102) an einem Geländer (70) einer Bedienerplattform (28) der landwirtschaftlichen Erntemaschine (10) befestigt ist.

9. Landwirtschaftliche Erntemaschine (10) nach einem der vorhergehenden Ansprüche, wobei die lichtemittierende Vorrichtung (102) am Auswurfrohr (34) befestigt ist.

10. Verfahren (300) zur Überwachung des Entleerungsvorgangs einer landwirtschaftlichen Erntemaschine (10), wobei die landwirtschaftliche Erntemaschine (10) ein Auswurfrohr (34) umfasst, das dazu eingerichtet ist, geerntetes Erntegutmaterial aus einem Lagerbehälter (16) der landwirtschaftlichen Erntemaschine (10) auszutragen, wobei das Verfahren umfasst:
Empfangen von Füllstandssensordaten mittels eines Rechensystems (106), die kennzeichnend für einen Füllstand des Lagerbehälters (16) der landwirtschaftlichen Erntemaschine (10) sind;
Empfangen von Austragratensensordaten mittels des Rechensystems (106), die kennzeichnend für eine Austragsrate des geernteten Erntegutmaterials durch das Auswurfrohr (34) sind;
Bestimmen des Füllstands des Lagerbehälters (16) mittels des Rechensystems (106) basierend auf den empfangenen Füllstandssensordaten;
Bestimmen der Austragsrate des geernteten Erntegutmaterials mittels des Rechensystems (106) basierend auf den empfangenen Austragratensensordaten; und
Steuern eines Betriebs einer lichtemittierenden Vorrichtung (102) mittels des Rechensystems (106), wobei die lichtemittierende Vorrichtung (102) innerhalb eines Sichtfeldes eines Bedieners der landwirtschaftlichen Erntemaschine (10) angeordnet ist, wenn dieser das Ausbringen des geernteten Erntegutmaterials durch das Auswurfrohr (34) beobachtet, sodass die lichtemittierende Vorrichtung (102) eine Anzeige des bestimmten Füllstands bereitstellt,
und **dadurch gekennzeichnet ist, dass**
eine von der lichtemittierenden Vorrichtung (102) emittierte Lichtfarbe kennzeichnend für die Austragsrate ist.

11. Verfahren (300) nach Anspruch 10, wobei das Steuern des Betriebs der lichtemittierenden Vorrichtung (102) das Steuern des Betriebs der lichtemittierenden Vorrichtung (102) mittels des Rechensystems (106) derart umfasst, dass sich einzelne lichtemittierende Abschnitte (92) einer Mehrzahl von lichtemittierenden Abschnitten (92) nacheinander deaktivieren, wenn der bestimmte Füllstand abnimmt.

12. Verfahren (300) nach einem der Ansprüche 10 oder 11, ferner umfassend das Deaktivieren der lichtemittierenden Vorrichtung (102) mittels des Rechensystems (106), wenn der Lagerbehälter (16) frei von geerntetem Material ist.

13. Verfahren (300) nach einem der Ansprüche 10 bis 12, wobei die lichtemittierende Vorrichtung (102) an einer Innenfläche (68) eines Strukturbauteils (66) einer Kabine (30) der landwirtschaftlichen Erntemaschine (10) befestigt ist.

## Revendications

1. Une moissonneuse agricole (10) comprenant un système (100) de surveillance pour le déchargement de la moissonneuse agricole (10), le système (100) comprenant un tube de déchargement (34) configuré pour décharger les matériaux récoltés d'un compartiment de stockage (16) de la moissonneuse agricole (10), le système (100) comprenant :
un capteur de niveau de remplissage (104) configuré pour générer des données indicatives d'un niveau de remplissage du compartiment de stockage (16) ;
un capteur de vitesse de déchargement (114) configuré pour générer des données indicatives d'une vitesse de déchargement des matériaux récoltés par le tube de déchargement (34) ;
un dispositif luminescent (102) positionné dans le champ de vision d'un opérateur de la moissonneuse agricole (10) lorsque l'opérateur observe un déchargement des matériaux récoltés par le tube de déchargement (34) ; et
un système informatique (106) couplé de manière communicative au capteur de niveau de remplissage (104) et au capteur de vitesse de déchargement (114), le système informatique (106) étant configuré pour :
déterminer le niveau de remplissage du compartiment de stockage (16) en fonction des données générées par le capteur de niveau de remplissage (104), pour
déterminer le taux de déchargement des matériaux récoltés en fonction des données générées par le capteur de vitesse de déchargement (114) ; et pour
commander un fonctionnement du dispositif luminescent (102) de sorte que le dispositif luminescent (102) fournit une indication concernant le niveau de remplissage déterminé ;
et **caractérisé en outre en ce qu'**une couleur de lumière émise par le dispositif luminescent (102) est indicative de la vitesse de déchargement.

2. La moissonneuse agricole (10) selon la revendication 1, dans laquelle le dispositif luminescent (102) comprend une pluralité de sections luminescentes individuelles (92) de sorte qu'au moins l'une parmi d'autres ou qu'un montage de sections luminescentes individuelles (92) qui sont illuminées indique le niveau de remplissage déterminé.

3. La moissonneuse agricole (10) selon la revendication 2, dans laquelle le système informatique (106) est en outre configuré pour commander le fonctionnement du dispositif luminescent (102) de sorte que les sections luminescentes individuelles (92) se désactivent séquentiellement à mesure que le niveau de remplissage déterminé baisse.

4. La moissonneuse agricole (10) selon la revendication 3, dans laquelle la couleur de la lumière émise par le dispositif luminescent (102) est une première couleur de lumière lorsque la vitesse de déchargement correspond à une première vitesse de déchargement.

5. La moissonneuse agricole (10) selon l'une quelconque des revendications 3 ou 4, dans laquelle la couleur de la lumière émise par le dispositif luminescent (102) est une seconde couleur de lumière lorsque la vitesse de déchargement correspond à une seconde vitesse de déchargement, la seconde couleur de lumière étant différente de la première couleur de lumière, la seconde vitesse de déchargement étant différente de la première vitesse de déchargement.

6. La moissonneuse agricole (10) selon l'une quelconque des revendications précédentes, dans laquelle le système informatique (106) est en outre configuré pour désactiver le dispositif luminescent (102) lorsque le compartiment de stockage (16) ne contient aucun matériau moissonné.

7. La moissonneuse agricole (10) selon l'une quelconque des revendications précédentes, dans laquelle le dispositif luminescent (102) est installé sur une surface intérieure (68) d'un composant structurel (66) d'une cabine (30) de la moissonneuse agricole (10).

8. La moissonneuse agricole (10) selon l'une quelconque des revendications précédentes, dans laquelle le dispositif luminescent (102) est installé sur une rampe (70) d'une plateforme d'opérateur (28) de la moissonneuse agricole (10).

9. La moissonneuse agricole (10) selon l'une quelconque des revendications précédentes, dans laquelle le dispositif luminescent (102) est installé sur le tube de déchargement (34).

10. Un procédé (300) de surveillance pour le déchargement d'une moissonneuse agricole (10), la moissonneuse agricole (10) incluant un tube de déchargement (34) configuré pour décharger les matériaux récoltés à partir d'un compartiment de stockage (16) de la moissonneuse agricole (10), le procédé comprenant :
la réception, à l'aide d'un système informatique (106), des données de capteur de niveau de remplissage indicatives d'un niveau de remplissage du compartiment de stockage (16) de la moissonneuse agricole (10) ;
la réception, à l'aide du système informatique (106), des données de capteur de vitesse de déchargement indicatives d'une vitesse de déchargement des matériaux récoltés par le tube de déchargement (34) ;
la détermination, à l'aide du système informatique (106), du niveau de remplissage du compartiment de stockage (16) de la moissonneuse agricole (10) en fonction des données de capteur de niveau de remplissage reçues ;
la détermination, à l'aide du système informatique (106), de la vitesse de déchargement des matériaux récoltés en fonction des données du capteur de vitesse de déchargement ; et
la commande, à l'aide du système informatique (106), d'un fonctionnement d'un dispositif luminescent (102) placé dans un champ de vision d'un opérateur de la moissonneuse agricole (10), lorsque l'opérateur observe le déchargement des matériaux récoltés par le tube de déchargement (34) de sorte que le dispositif luminescent (102) fournit une indication du niveau de remplissage déterminé ;
et **caractérisé en ce qu'**une couleur de lumière émise par le dispositif luminescent (102) est indicative de la vitesse de déchargement.

11. Le procédé (300) selon la revendication 10, dans lequel la commande du fonctionnement du dispositif luminescent (102) comprend la commande, à l'aide du système informatique (106), du fonctionnement du dispositif luminescent (102) de sorte que des sections luminescentes individuelles (92) parmi une pluralité de sections luminescentes (92) se désactivent séquentiellement à mesure que le niveau de remplissage déterminé baisse.

12. Le procédé (300) selon l'une quelconque des revendications 10 ou 11 comprenant en outre la désactivation, à l'aide du système informatique (106), du dispositif luminescent (102) lorsque le compartiment de stockage (16) ne contient aucun matériau moissonné.

13. Le procédé (300) selon l'une quelconque des revendications 10 à 12, dans lequel le dispositif luminescent (102) est installé sur une surface intérieure (68) d'un composant structurel (66) d'une cabine (30) de la moissonneuse agricole (10).
